(19) Europäisches Patentamt
European Patent Office
Office européen des brevets

(11) EP 4 379 885 A1

(12) **EUROPEAN PATENT APPLICATION**

(43) Date of publication:
**05.06.2024 Bulletin 2024/23**

(21) Application number: **23201599.0**

(22) Date of filing: **04.10.2023**

(51) International Patent Classification (IPC):
***H01M 10/0525*** (2010.01) ***H01M 10/0567*** (2010.01)
***H01M 10/0569*** (2010.01) ***H01M 10/42*** (2006.01)
*H01G 11/62* (2013.01) *H01G 11/64* (2013.01)
*H01M 10/30* (2006.01) *H01M 10/34* (2006.01)

(52) Cooperative Patent Classification (CPC):
**H01M 10/0567; H01M 10/0525; H01M 10/0569; H01M 10/4235;** H01G 11/62; H01G 11/64; H01M 10/30; H01M 10/345; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022190540**

(71) Applicant: **Prime Planet Energy & Solutions, Inc.**
**Chuo-ku**
**Tokyo**
**103-0022 (JP)**

(72) Inventor: **YANO, Yuta**
**Tokyo, 103-0022 (JP)**

(74) Representative: **Kuhnen & Wacker**
**Patent- und Rechtsanwaltsbüro PartG mbB**
**Prinz-Ludwig-Straße 40A**
**85354 Freising (DE)**

# (54) NONAQUEOUS ELECTROLYTE SOLUTION AND ELECTRICITY STORAGE DEVICE INCLUDING THE SAME

(57) Provided is a technique suppressing remaining of fluorine ions in an electricity storage device including a nonaqueous electrolyte solution containing a fluorine-containing lithium salt. The nonaqueous electrolyte solution (80) contains an electrolyte salt being a fluorine-containing lithium salt, a nonaqueous solvent being carbonate, and a scavenger capturing fluoride ions. The scavenger is a compound represented by the following general formula (1). In the general formula (1), Ri is any of an alkyl group, an alkenyl group, or a phenyl group is equal to or less than 6 carbon atoms and in which at least one hydrogen atom has been substituted with halogen, or is not substituted with halogen; and $R_2$, $R_3$, and $R_4$ are each any one of a methyl group, an ethyl group, a n-propyl group, an iso-propyl group, or a n-butyl group.

[Chemical 1]

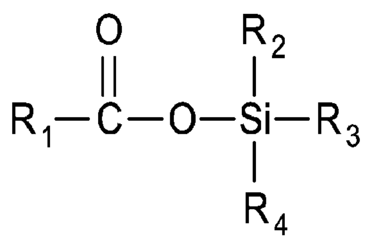

(1)

EP 4 379 885 A1

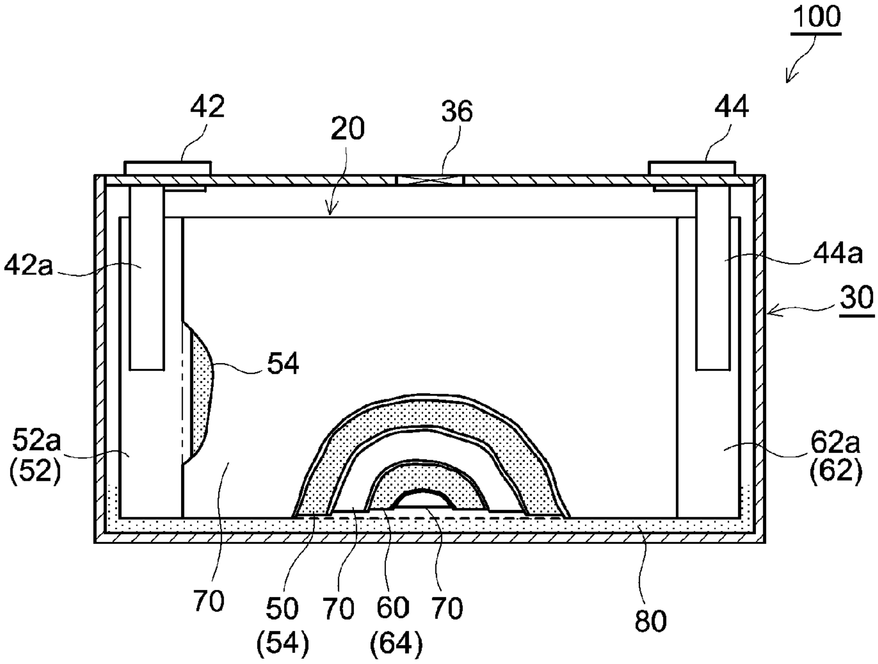


FIG.1

## Description

BACKGROUND OF THE DISCLOSURE

1. Technical Field

The present disclosure relates to a nonaqueous electrolyte solution and an electricity storage device including the same. 2. Background

Japanese Patent Application Publication No. 2015-159120 discloses a nonaqueous electrolyte solution containing an electrolyte salt and an additive which is a $SO_4$ group-containing compound having a specific structure. In such a $SO_4$ group-containing compound, one of the hydrogen atoms of sulfuric acid ($H_2SO_4$) has been substituted with an alkyl group with a specific carbon number, an alkoxy alkyl group, an aryl group, an alkenyl group, an alkynyl group, a chain or cyclic ester group, an alkyl carbonyl group, an aryl carbonyl group, a sulfur atom-containing organic group, a silicon atom-containing organic group, a cyano group-containing organic group, a phosphorus atom-containing organic group, or $-P(=O)F_2$ group. The other hydrogen atom of sulfuric acid has been substituted with an alkali metal such as lithium, an alkali earth metal such as magnesium, quaternary onium, or a silyl group in the compound. This publication indicates that due to the characteristics of the chemical structure, some of the $SO_4$ group-containing compound is decomposed at the negative electrode to form a film, and also decomposed at the positive electrode to form a film with low electric resistance. It is believed that this can significantly improve the electrochemical properties of the electricity storage devices over a wide temperature range.

Non-Patent Document 1 describes a mechanism of decomposition of $Li_2CO_3$ formed on the surface of a layered lithium transition metal oxide. The document indicates that hydrogen fluoride generated by the reaction of the supporting electrolyte (e.g., $LiPF_6$) in the electrolyte solution with water or hydrogen ions decomposes $Li_2CO_3$, which causes elution of transition metal and an increase in resistance at the positive electrode and the negative electrode. This document further indicates that hydrogen fluoride dissolves an aluminum current collector, thereby increasing the resistance.

Non-Patent Document 2 indicates that when high-voltage operation occurs at a positive electrode of a lithium-ion battery, a reaction in which water and hydrogen fluoride are generated occurs at the cathode-electrolyte interphase by decomposition of the solvent. This document further indicates that the hydrogen fluoride attacks both the positive electrode and the negative electrode, which causes dissolution of the transition metal from the positive electrode and degradation of the SEI coating on the negative electrode.

Non-Patent Document 1 is Freiberg, et al., Electrochimica. Acta., 2020, 346,136271.
Non-Patent Document 2 is Yu, et al., Electrochem. Commun., 2022, 138, 107286

SUMMARY

The present inventor considers suppressing the remaining of fluorine ions in the electricity storage device including a nonaqueous electrolyte solution containing a fluorine-containing lithium salt as an electrolyte salt.

The nonaqueous electrolyte solution disclosed herein is used in the electricity storage device. The nonaqueous electrolyte solution contains an electrolyte salt which is a fluorine-containing lithium salt, a nonaqueous solvent which is carbonate, and a scavenger which captures fluoride ions. The scavenger is a compound represented by the following general formula (1).

[Chemical 1]

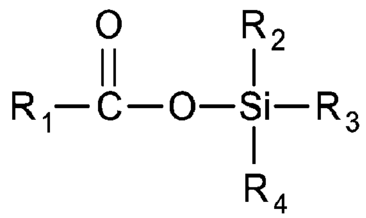

(1)

In the general formula (1), Ri is any of an alkyl group, an alkenyl group, or a phenyl group which has equal to or less than 6 carbon atoms and in which at least one hydrogen atom is substituted with halogen, or is not substituted

with halogen. $R_2$, $R_3$, and $R_4$ are each any one of a methyl group, an ethyl group, a n-propyl group, an iso-propyl group, or a n-butyl group. With such a configuration, in the electricity storage device including a nonaqueous electrolyte solution that contains a fluorine-containing lithium salt, the remaining of fluorine ions can be suppressed.

In a preferred aspect of the nonaqueous electrolyte solution disclosed herein, in the general formula (1), $R_2$, $R_3$, and $R_4$ are each a methyl group. With such a configuration, the steric hinderance of the scavenger can be reduced. This can enhance an effect of suppressing the remaining of fluorine ions (the fluorine ion remaining suppression effect) in the nonaqueous electrolyte solution.

In a preferred aspect of the nonaqueous electrolyte solution disclosed herein, Ri in the general formula (1) at least includes a halogen atom. With such a configuration, the electron-withdrawing effect of the halogen atom facilitates desorption of the ester group from the silicon atom. This can enhance an effect of suppressing the remaining of fluorine ions (the fluorine ion remaining suppression effect) in the nonaqueous electrolyte solution.

In a preferred aspect of the nonaqueous electrolyte solution disclosed herein, the scavenger is trimethylsilyl acetate, trimethylsilyl propionate, triisopropylsilyl acrylate, or trimethylsilyl trifluoroacetate. The scavenger which is any of the compounds described above is preferable to achieve the fluorine ion remaining suppression effect in the nonaqueous electrolyte solution.

In a preferred aspect, the nonaqueous electrolyte solution disclosed herein contains the scavenger in 0.1M or higher. With such a configuration, the remaining amount of fluorine ions in the nonaqueous electrolyte solution can be reduced appropriately.

The technology disclosed herein discloses an electricity storage device including an electrode body, the nonaqueous electrolyte solution, and a case housing the electrode body and the nonaqueous electrolyte solution. The electricity storage device with such a configuration includes the nonaqueous electrolyte solution, which suppresses degradation in the battery performance.

## BRIEF DESCRIPTION OF THE DRAWINGS

Fig. 1 is a cross-sectional view of an electricity storage device 100.
Fig. 2 is a schematic view of an electrode body 20.

## DESCRIPTION OF THE EMBODIMENTS

Hereinafter, an embodiment of the nonaqueous electrolyte solution disclosed herein and an embodiment of the electricity storage device including the nonaqueous electrolyte solution will be described. The embodiments described herein are not intended to limit the technology disclosed herein. Unless specifically mentioned, the technology disclosed herein is not limited to the embodiments described herein. Each drawing has been schematically illustrated and therefore may not necessarily reflect actual elements. The same members/portions which exhibit the same action are denoted by the same reference numerals, as appropriate, and the duplicated descriptions are omitted. The expression "A to B" indicating a numerical range means "A or more to B or less," and also means "above A and below B" unless otherwise specified.

The "electricity storage device" herein generally refers to a device which causes charging and discharging by movement of charge carriers between a pair of electrodes (a positive electrode and a negative electrode) via an electrolyte. The electricity storage device herein encompasses secondary batteries such as a lithium-ion secondary battery, a nickel hydride battery, and a nickel cadmium battery, and capacitors such as a lithium-ion capacitor and an electric double-layer capacitor. The following describes embodiments targeting for a lithium-ion electricity storage device as an example of the electricity storage devices.

Fig. 1 is a cross-sectional view of an electricity storage device 100. Fig. 2 is a schematic view of an electrode body 20. As shown in Fig. 1, the electricity storage device 100 includes the electrode body 20, a case 30, and a nonaqueous electrolyte solution 80.

As shown in Figs. 1 and 2, the electrode body 20 is a wound electrode body in which a long sheet-like positive electrode sheet 50 and a long sheet-like negative electrode sheet 60 stacked on each other with a long sheet-like separator 70 interposed therebetween are wound in a sheet longitudinal direction (hereinafter also merely referred to as the "longitudinal direction"). In the electrode body 20, an exposing region 52a in the positive electrode sheet 50 and an exposing region 62a in the negative electrode sheet 60 protrude outward from both ends in the lateral direction orthogonal to the longitudinal direction.

As shown in Figs. 1 and 2, the positive electrode sheet 50 includes a long sheet-like positive electrode collector foil 52 and a positive electrode active material layer 54. The positive electrode collector foil 52 is, for example, an aluminum foil. In this embodiment, the positive electrode collector foil 52 has a region provided with the positive electrode

active material layer 54 and the exposing region 52a where the positive electrode active material layer 54 is not provided and the surface of the positive electrode collector foil 52 is exposed. The positive electrode active material layer 54 is provided, for example, in a strip on one or both surfaces (in this case, both surfaces) of the positive electrode collector foil 52 along the longitudinal direction. The positive electrode active material layer 54 is not provided at the end in the lateral direction (the left end in the drawings). The exposing region 52a herein is a strip-like region at the end in the lateral direction (the left end in the drawings). As shown in Fig. 1, a current collector 42a is attached to the exposing region 52a.

The positive electrode active material layer 54 contains, for example, a positive electrode active material. Examples of the positive electrode active material include lithium transition metal oxides such as $LiNi_{1/3}Co_{1/3}Mn_{1/3}O_2$, $LiNiO_2$, $LiCoO_2$, $LiFeO_2$, $LiMn_2O_4$, $LiNi_{0.5}Mn_{1.5}O_4$ and lithium transition metal phosphate compounds such as $LiFePO_4$. The positive electrode active material layer 54 may further contain an electroconductive material, a binder, and the like besides the positive electrode active material. Examples of the electroconductive material include carbon black such as acetylene black (AB) and other carbon materials such as graphite. Examples of the binder include polyvinylidene fluoride (PVDF).

As shown in Figs. 1 and 2, the negative electrode sheet 60 includes a long sheet-like negative electrode current collector foil 62 and a negative electrode active material layer 64. The negative electrode current collector foil 62 is, for example, a copper foil. In this embodiment, the negative electrode current collector foil 62 has a region provided with the negative electrode active material layer 64 and an exposing region 62a where the negative electrode active material layer 64 is not provided and the surface of the negative electrode active material layer 64 is exposed. The negative electrode active material layer 64 is provided, for example, in a strip on one or both surfaces (in this case, both surfaces) of the negative electrode current collector foil 62 along the longitudinal direction. The negative electrode active material layer 64 is not provided at the end in the lateral direction orthogonal to the longitudinal direction (the right end in the drawings). The exposing region 62a herein is a strip-like region at the end in the lateral direction (the right end in the drawings). As shown in Fig. 1, a current collector 44a is attached to the exposing region 62a.

The negative electrode active material layer 64 contains, for example, a negative electrode active material. Examples of the negative electrode active material include carbon materials such as graphite, hard carbon, and soft carbon. The negative electrode active material layer 64 may further contain a binder, a thickener, and the like besides the negative electrode active material. Examples of the binder include styrene-butadiene rubber (SBR). Examples of the thickener include carboxymethyl cellulose (CMC).

Examples of the separator 70 include porous sheets (films) made of resin materials such as polyethylene (PE), polypropylene (PP), polyester, cellulose, and polyamide. Such a porous sheet may have a monolayer structure, or a lamination structure of two or more layers (e.g., a three-layer structure where PP layers are stacked on both surfaces of a PE layer). The surface of the separator 70 may be provided with a heat-resistant layer (HRL).

The case 30 is, for example, an outer container housing the electrode body 20 and the nonaqueous electrolyte solution 80. The case 30 herein is a flat square case. As shown in Fig. 1, the case 30 includes a positive electrode terminal 42, a negative electrode terminal 44, a safety valve 36, and a liquid injection hole (not shown). The positive electrode terminal 42 is, for example, a terminal for external connection on the positive electrode side. The positive electrode terminal 42 is electrically connected to the positive electrode sheet 50 of the electrode body 20 via the current collector 42a. The negative electrode terminal 44 is, for example, a terminal for external connection on the negative electrode side. The negative electrode terminal 44 is electrically connected to the negative electrode sheet 60 of the electrode body 20 via the current collector 44a. The safety valve 36 is a thin portion set to release the internal pressure when the internal pressure of the case 30 rises to a predetermined level or more. The liquid injection hole is a portion for injecting the nonaqueous electrolyte solution 80 to the case 30.

The nonaqueous electrolyte solution 80 includes, for example, an electrolyte salt, a nonaqueous solvent, and a scavenger. The electrolyte salt herein is a fluorine-containing lithium salt. Examples of the electrolyte salt include $LiPF_6$, $LiBF_4$, lithium bis(fluorosulfonyl)imide (LiFSI), and lithium bis(trifluoromethane)sulfoneimide (LiTFSI). The electrolyte salts may be used alone or in combination of two or more of them. As an electrolyte salt, $LiPF_6$ is suitably used. The concentration of the electrolyte salt in the nonaqueous electrolyte solution 80 is not particularly limited and is preferably from 0.7 mol/L to 1.3 mol/L inclusive.

The nonaqueous solvent may be, for example, a carbonate. Examples of the carbonate include ethylene carbonate (EC), diethyl carbonate (DEC), dimethyl carbonate (DMC), ethyl methyl carbonate (EMC), monofluoro ethylene carbonate (MFEC), difluoro ethylene carbonate (DFEC), monofluoromethyl difluoromethyl carbonate (F-DMC), and trifluorodimethyl carbonate (TFDMC). The electrolyte salts may be used alone or in combination of two or more of them. The carbonate preferably includes at least one of EC, DMC, or EMC. The carbonate is more preferably a solvent mixture of at least two selected from the group consisting of EC, DMC, and EMC.

The scavenger is, for example, a compound that can capture fluorine ions. The scavenger is, for example, preferably a compound represented by the following general formula (1).

[Chemical 2]

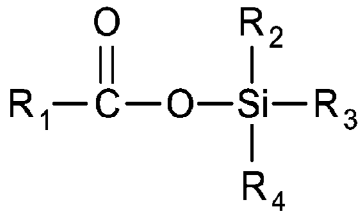

(1)

In the general formula (1), Ri may be, for example, an alkyl group, an alkenyl group, or a phenyl group with 6 or less carbon atoms and in which at least one hydrogen atom is substituted with halogen, or is not substituted with halogen. Examples of the alkyl group include linear alkyl groups such as a methyl group, an ethyl group, a n-propyl group, a n-butyl group, a n-pentyl group, and a n-hexyl group; and branched alkyl groups such as an iso-propyl group, an iso-butyl group, a sec-butyl group, a tert-butyl group, an iso-pentyl group, a 1-ethyl propyl group, a 3-methyl butyl group, a 2,2-dimethyl propyl group, an iso-hexyl group, a 3-ethyl butyl group, and a 3,3-dimethyl butyl group. Examples of the alkenyl group include linear alkenyl groups such as an ethenyl group, a n-propenyl group, a n-butenyl group, a n-pentenyl group, and a n-hexenyl group; and branched alkenyl groups such as an iso-propenyl group, an iso-butenyl group, a sec-butenyl group, an iso-pentenyl group, a 1-ethyl propenyl group, a 3-methyl butenyl group, 2,2-dimethyl propenyl group, an iso-hexenyl group, a 3-ethyl butenyl group, and a 3,3-dimethyl butenyl group. In light of enhancing the electron-withdrawing effect in Ri and facilitating desorption of the ester group containing Ri from the silicon atom, it is preferred that one or more hydrogen atoms in Ri be substituted with halogen (e.g., substituted with fluorine, chlorine, bromine, or iodine). When Ri is an alkyl or alkenyl group, it is preferred that the carbon number be 3 or less in light of enhancing the electron-withdrawing effect.

In the general formula (1), $R_2$, $R_3$, and $R_4$ may each be any one of a methyl group ($CH_3$), an ethyl group ($CH_2CH_3$), a n-propyl group ($CH_2CH_2CH_3$), an iso-propyl group ($CH(CH_3)_2$), or a n-butyl group ($CH_2CH_2CH_2CH_3$). When $R_2$, $R_3$, and $R_4$ are the alkyl groups, the steric hindrance around the silicon atom in the general formula (1) can be reduced, making it easier for the fluoride ions to access the silicon atom. In light of this fact, $R_2$, $R_3$, and $R_4$ are better to be alkyl groups with smaller carbon numbers, and preferably all methyl groups.

The scavenger used is, for example, preferably trimethylsilyl acetate, trimethylsilyl propionate, triisopropylsilyl acrylate, or trimethylsilyl trifluoroacetate. These scavengers may be used alone or in combination of two or more kinds of them.

The concentration of the scavenger in the nonaqueous electrolyte solution 80 is not particularly limited as long as the effect of the technology disclosed herein is exhibited, but may be set to approximately 0.01M to 10M. In light of sufficiently capturing fluorine ions in the nonaqueous electrolyte solution 80, the concentration of the scavenger is preferably 0.05M or more, more preferably 0.1M or more. In light of suppressing degradation of the battery performance by the scavenger, the concentration of the scavenger is preferably 7.5M or less, more preferably 5M or less, or may be 2.5M or less or 2M or less.

As mentioned above, the nonaqueous electrolyte solution 80 contains an electrolyte salt, a nonaqueous solvent, and a scavenger. The electrolyte salt is a fluorine-containing lithium salt. The nonaqueous solvent is carbonate. The scavenger is a compound represented by the general formula (1). Since the nonaqueous electrolyte solution 80 with such composition contains a scavenger represented by the general formula (1), fluorine ions can be captured. This allows suppression of remaining of fluorine ions in the solution. Regarding the mechanism of capturing fluorine ions by the scavenger, the present inventor assumes the mechanism shown in the following chemical formula (X). Note that it is not intended to limit the mechanism by which the effect of the technology disclosed herein is exhibited to such a mechanism.

[Chemical 3]

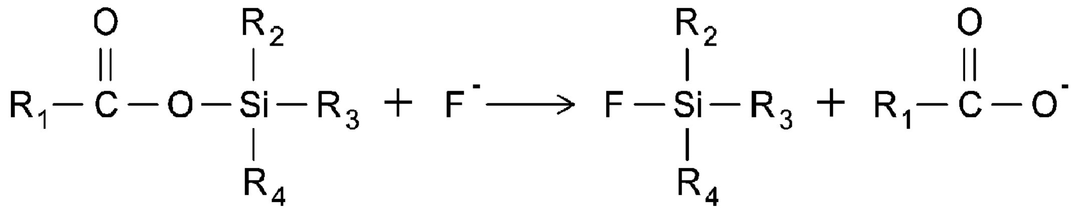

(X)

When the nonaqueous electrolyte solution 80 contains fluorine ions, as can be seen from the chemical formula (X), the fluorine ions approach and bond with the silicon atoms and an ester moiety as $R_1COO^-$ is desorbed from the silicon atom. Since the bond between the fluorine ion and the silicon atom is a covalent bond, the fluorine ion captured by the scavenger is not released into the nonaqueous electrolyte solution 80. As described above, the remaining of fluorine ions in the nonaqueous electrolyte solution 80 is suppressed.

The electricity storage device 100 includes an electrode body 20, a nonaqueous electrolyte solution 80, and a case 30. As described above, the remaining of fluorine ions in the nonaqueous electrolyte solution 80 is suppressed. This suppresses the occurrence of defects (e.g., dissolution of the positive electrode active material, degradation of the SEI film, etc.) that can be caused by fluoride ions in the electricity storage device 100. Accordingly, the reduction in the battery performance is suppressed in the electricity storage device 100.

The electricity storage device 100 can be used in various applications. Suitable applications include power sources for driving, to be mounted on vehicles such as electric vehicles (BEV), hybrid vehicles (HEV), and plug-in hybrid vehicles (PBEV). The electricity storage device 100 can be used as an electricity storage battery such as a compact power storage device. The electricity storage device 100 may also be used in a form of assembled battery in which multiple electricity storage devices 100 are connected in series and/or parallel.

Some Examples regarding the present disclosure will be described below. However, it is not intended that the present disclosure is limited to such Examples.

<Production of Lithium Ion Secondary Battery for Evaluation>

Lithium-ion secondary batteries for evaluation according to Examples 1 to 9 were produced as described below.

-Example 1-

$LiNi_{1/3}Co_{1/3}Mn_{1/3}O_2$ (LNCM) as a positive electrode active material, acetylene black (AB) as an electroconductive material, and polyvinylidene fluoride (PVdF) as a binder were mixed at a mass ratio of LNCM : AB : PVdF = 87 : 10 : 3 with N-methylpyrrolidone (NMP). Thus, a slurry for forming a positive electrode active material layer was prepared. The slurry was applied to an aluminum foil and then dried. A positive electrode sheet including a positive electrode active material layer was produced as described above. Dimensions of the positive electrode active material layer were 47 mm × 45 mm.

Graphite (C) as a negative electrode active material, styrene-butadiene rubber (SBR) as a binder, and carboxymethyl cellulose (CMC) as a thickener were mixed at a mass ratio C : SBR : CMC = 98 : 1 : 1 with ion-exchange water. Thus, a slurry for forming a negative electrode active material layer was prepared. The slurry was applied to a copper foil and then dried. Thus, a negative electrode sheet including a negative electrode active material layer was produced. Dimensions of the negative electrode active material layer were 49 mm × 47 mm.

As a separator base, a microporous polypropylene sheet having a thickness of 12 μm was provided. The separator base was processed into a bag shape. Thus, the bag-shaped separator was produced. Dimensions of the separator were 51 mm × 49 mm.

The positive electrode sheet was housed in the bag-shaped separator. The negative electrode sheet was housed in another bag-shaped separator. The electrode sheets housed in the respective bag-shaped separators were stacked such that the positive electrode active material layer and the negative electrode active material layer face each other. Thus, an electrode body was produced. A current collector terminal was attached to the electrode body, which was then housed in a laminate case. Thereafter, a nonaqueous electrolyte solution was injected into the laminate case, and the laminate case was sealed by heat welding. In this manner, a lithium-ion secondary battery for evaluation according to Example 1 was obtained. The nonaqueous electrolyte solution contained an electrolyte salt which was 1.16M $LiPF_6$,

a nonaqueous solvent mixture containing ethylene carbonate (EC), ethyl methyl carbonate (EMC), and dimethyl carbonate (DMC) at a volume ratio of EC : EMC : DMC = 3 : 3 : 4, and a scavenger which was equal to or lower than 1.0M trimethylsilyl acetate represented by the following chemical formula (A):

[Chemical 4]

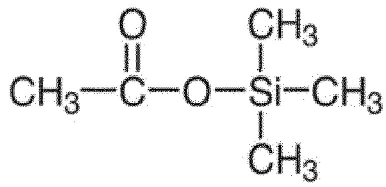

(A)

-Example 2-

As the scavenger, trimethylsilyl propionate represented by the following chemical formula (B):

[Chemical 5]

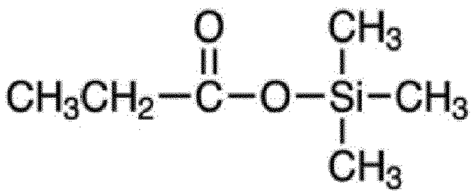

(B)

was used. A lithium-ion secondary battery for evaluation according to Example 2 was obtained using the same materials and in the same manner as in Example 1 except for this.

-Example 3-

As the scavenger, triisopropylsilyl acrylate represented by the following chemical formula (C):

[Chemical 6]

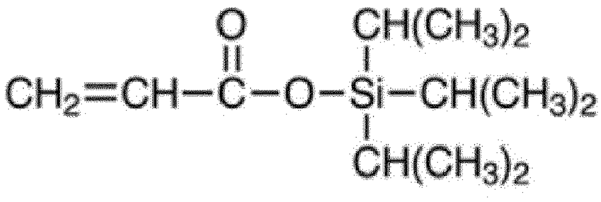

(C)

was used. A lithium-ion secondary battery for evaluation according to Example 3 was obtained using the same material and in the same manner as in Example 1 except for this.

-Example 4-

As the scavenger, trimethylsilyl trifluoroacetate represented by the following chemical formula (D):

[Chemical 7]

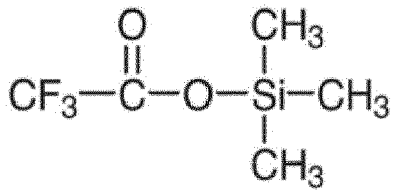

(D)

was used. A lithium-ion secondary battery for evaluation according to Example 4 was obtained using the same materials and in the same manner as in Example 1 except for this.

-Example 5-

The concentration of the scavenger was set to 0.1M. A lithium-ion secondary battery for evaluation according to Example 5 was obtained using the same materials and in the same manner as in Example 4 except for this.

-Example 6-

The concentration of the scavenger was set to 2M. A lithium-ion secondary battery for evaluation according to Example 6 was obtained using the same materials and in the same manner as in Example 4 except for this.

-Example 7-

The concentration of the scavenger was set to 5M. A lithium-ion secondary battery for evaluation according to Example 7 was obtained using the same materials and in the same manner as in Example 4 except for this.

-Example 8-

As the scavenger, trimethylphenyl acetate represented by the following chemical formula (E):

[Chemical 8]

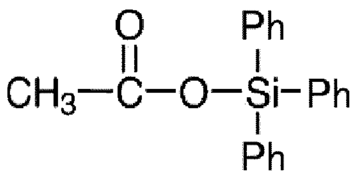

(E)

was used. A lithium-ion secondary battery for evaluation according to Example 8 was obtained using the same materials and in the same manner as in Example 1 except for this. In the chemical formula (E), "Ph" represents a phenyl group.

-Example 9-

No scavenger was used. A lithium-ion secondary battery for evaluation according to Example 9 was obtained using the same materials and in the same manner as in Example 1 except for this.

<Evaluation of Fluorine Ion Remaining Suppression Effect>

The lithium-ion secondary battery for evaluation according to each Example was subjected to a total of five cycles of constant current charging at a current value of 1C from 3.0 V to 4.3 V and constant current discharging at a current value of 0.5C from 4.3 V to 3.0 V Thereafter, the lithium-ion secondary battery was disassembled, and the concentration of fluorine ions was measured using ion chromatography (IC). For IC analysis of this measurement, an analyzer (ICS-600) manufactured by Dionex Japan was used. As a developer, an acetonitrile solution containing sodium carbonate (0.1M) and sodium bicarbonate (0.1M) was used. The specific method is as follows.

First, the negative electrode sheet was removed from the disassembled secondary battery for evaluation, and a test piece of 30 mm × 30 mm in size was obtained. The test piece was then introduced into the developer in a platinum (Pt) beaker. Subsequently, the test piece was subjected to ultrasonic treatment for 10 minutes to peel the negative electrode active material from the negative electrode sheet and elute the components into the developer. Thus, an eluate was obtained. The eluate was subjected to suction filtration to remove the negative electrode active material from the eluate. The eluate was then diluted to 50 ml with the developer and was subjected to the IC analysis. By the IC analysis, the concentration (mass%) of fluorine ions in the eluate was calculated.

Based on the measurement value obtained as described above, the fluorine ion remaining suppression effect in the lithium-ion secondary battery for evaluation was evaluated. First, the percentage (%) of the concentration of fluoride ions in each Example was calculated, taking the concentration of fluoride ions in Example 9 as 100%. This value (%) was defined as the fluorine ion remaining percentage (%), and shown in the column "Remaining percentage (%)" in Table 1. Based on the remaining percentage (%) in each Example, the fluorine ion remaining suppression effect was evaluated as follows. The evaluation results are shown in the column "Evaluation" in Table 1

E (Excellent suppression effect): The fluorine ion remaining percentage was 75% or less.
G (Good suppression effect): The fluorine ion remaining percentage exceeded 75% and was less than 95%.
P (Poor effect): The fluorine ion remaining percentage was 95% or more.

[Table 1]

| | Scavenger | Concentration (M) | $F^-$ remaining suppression effect | | Capacity retention rate (%) |
|---|---|---|---|---|---|
| | Compound | | Remaining percentage (%) | Evaluation | |
| Example 1 | Trimethylsilyl acetate | 1 | 50 | E | 99 |
| Example 2 | Trimethylsilyl propionate | 1 | 55 | E | 98 |
| Example 3 | Triisopropylsilyl acrylate | 1 | 93 | G | 96 |
| Example 4 | Trimethylsilyl trifluoroacetate | 1 | 43 | E | 99 |
| Example 5 | | 0.1 | 71 | E | 98 |
| Example 6 | | 2 | 36 | E | 99 |
| Example 7 | | 5 | 36 | E | 99 |
| Example 8 | Triphenylsilyl acetate | 1 | 98 | P | 95 |
| Example 9 | - | - | 100 | P | 95 |

<Battery Performance Evaluation>

The lithium-ion secondary battery for evaluation according to each Example was subjected to a total of five cycles of constant current charging at a current value of 1C from 3.0 V to 4.3 V and constant current discharging at a current value of 0.5C from 4.3 V to 3.0 V Thereafter, the capacity of the lithium-ion secondary battery for evaluation was measured, and a value determined using the following mathematical equation (P) was used as the capacity retention rate (%) of each Example. The results are shown in the column "Capacity retention rate (%)" in Table 1. The example in which the capacity retention rate exceeded 95% was evaluated as "no degradation of battery performance."

$$\text{Mathematical equation (P): Capacity retention rate (\%)} = (\text{Capacity after 5 cycles}/\text{Initial capacity}) \times 100$$

Comparing Examples 1 to 7 with Examples 8 and 9 for the results shown in Table 1, it was found that the nonaqueous electrolyte solution containing an electrolyte salt which was a fluorine-containing lithium salt, a nonaqueous solvent which was carbonate, and a scavenger which was a compound represented by the general formula (1) could suppress the remaining of fluorine ions in the electricity storage device. It was also found that the use of such nonaqueous electrolyte solution had the effect of suppressing the degradation of the performance of the electricity storage device (e.g., the effect of suppressing the reduction in capacity maintenance rate due to charging/discharging).

As described above, specific aspects of the technology disclosed herein include those described in the following Notes:

Note 1: A nonaqueous electrolyte solution (80) used in an electricity storage device (100), the nonaqueous electrolyte solution (80) comprising:

an electrolyte salt that is a fluorine-containing lithium salt;
a nonaqueous solvent that is carbonate; and
a scavenger that captures fluorine ions, wherein
the scavenger is a compound represented by the general formula (1):

[Chemical 9]

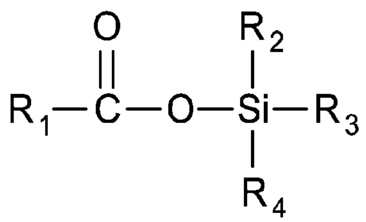

(1)

(wherein Ri is any of an alkyl group, an alkenyl group, or a phenyl group which has equal to or less than 6 carbon atoms and in which at least one hydrogen atom is substituted with halogen, or is not substituted with halogen; and $R_2$, $R_3$, and $R_4$ are each any one of a methyl group, an ethyl group, a n-propyl group, an iso-propyl group, or a n-butyl group).

Note 2: The nonaqueous electrolyte solution (80) according to Note 1, wherein in the general formula (1), $R_2$, $R_3$, and $R_4$ are each a methyl group.

Note 3: The nonaqueous electrolyte solution (80) according to Note 1 or 2, wherein in the general formula (1), Ri contains at least one halogen atom.

Note 4: The nonaqueous electrolyte solution (80) according to any one of Notes 1 to 3, wherein the scavenger is trimethylsilyl acetate, trimethylsilyl propionate, triisopropylsilyl acrylate, or trimethylsilyl trifluoroacetate.

Note 5: The nonaqueous electrolyte solution (80) according to any one of Notes 1 to 4, wherein the nonaqueous electrolyte solution (80) contains the scavenger in 0.1M or more. Note 6:

An electricity storage device (100) comprising:

an electrode body (20);
the nonaqueous electrolyte solution (80) according to any one of Notes 1 to 5, and
a case (30) housing the electrode body (20) and the nonaqueous electrolyte solution (80).

The embodiments of the technology disclosed herein have been described above, but the description is not intended to limit the technology disclosed herein. The technology disclosed herein may be implemented in other embodiments. The technology described is the appended claims include various modifications and changes of the foregoing embodiments. For example, it is possible to replace partially the embodiments with other aspects, and it is also possible to add other variations to the embodiments. If the technical feature is not described as essential, it can be eliminated, as appropriate.

## Claims

1. A nonaqueous electrolyte solution (80) used in an electricity storage device (100), the nonaqueous electrolyte solution (80) comprising:

an electrolyte salt that is a fluorine-containing lithium salt;
a nonaqueous solvent that is carbonate; and
a scavenger that captures fluorine ions,
wherein
the scavenger is a compound represented by the general formula (1):

[Chemical 1]

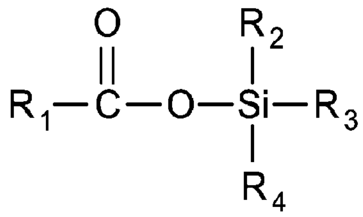

(1)

(wherein Ri is any of an alkyl group, an alkenyl group, or a phenyl group which has equal to or less than 6 carbon atoms and in which at least one hydrogen atom is substituted with halogen, or is not substituted with halogen; and $R_2$, $R_3$, and $R_4$ are each any one of a methyl group, an ethyl group, a n-propyl group, an iso-propyl group, or a n-butyl group).

**2.** The nonaqueous electrolyte solution (80) according to claim 1, wherein in the general formula (1), $R_2$, $R_3$, and $R_4$ are each a methyl group.

**3.** The nonaqueous electrolyte solution (80) according to claim 1, wherein in the general formula (1), Ri contains at least one halogen atom.

**4.** The nonaqueous electrolyte solution (80) according to claim 1, wherein the scavenger is trimethylsilyl acetate, trimethylsilyl propionate, triisopropylsilyl acrylate, or trimethylsilyl trifluoroacetate.

**5.** The nonaqueous electrolyte solution (80) according to claim 1, wherein the nonaqueous electrolyte solution (80) contains the scavenger in 0.1M or more.

**6.** An electricity storage device (100) comprising:

an electrode body (20);
the nonaqueous electrolyte solution (80) according to any one of claims 1 to 5,
a case (30) housing the electrode body (20) and the nonaqueous electrolyte solution (80).

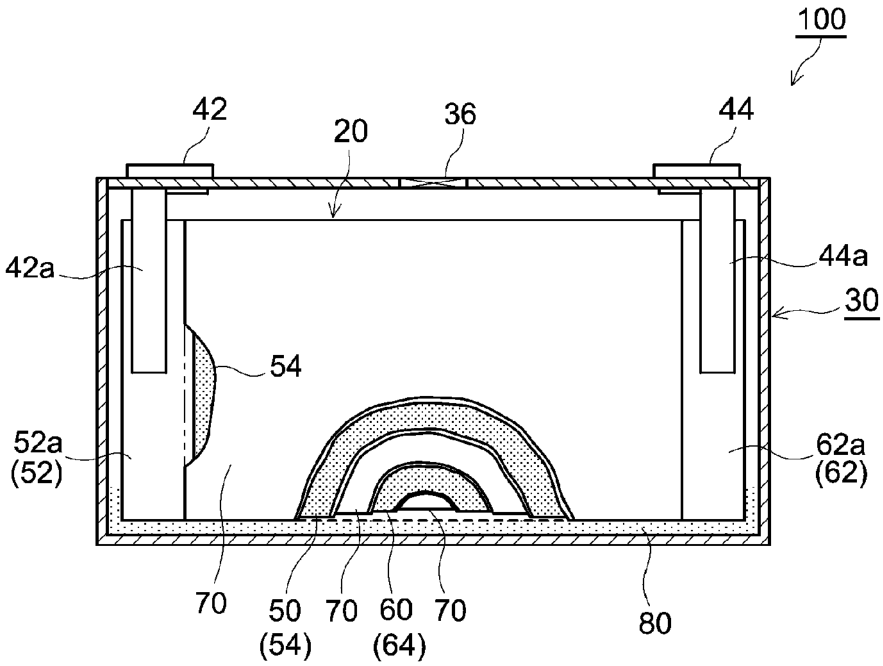


FIG.1

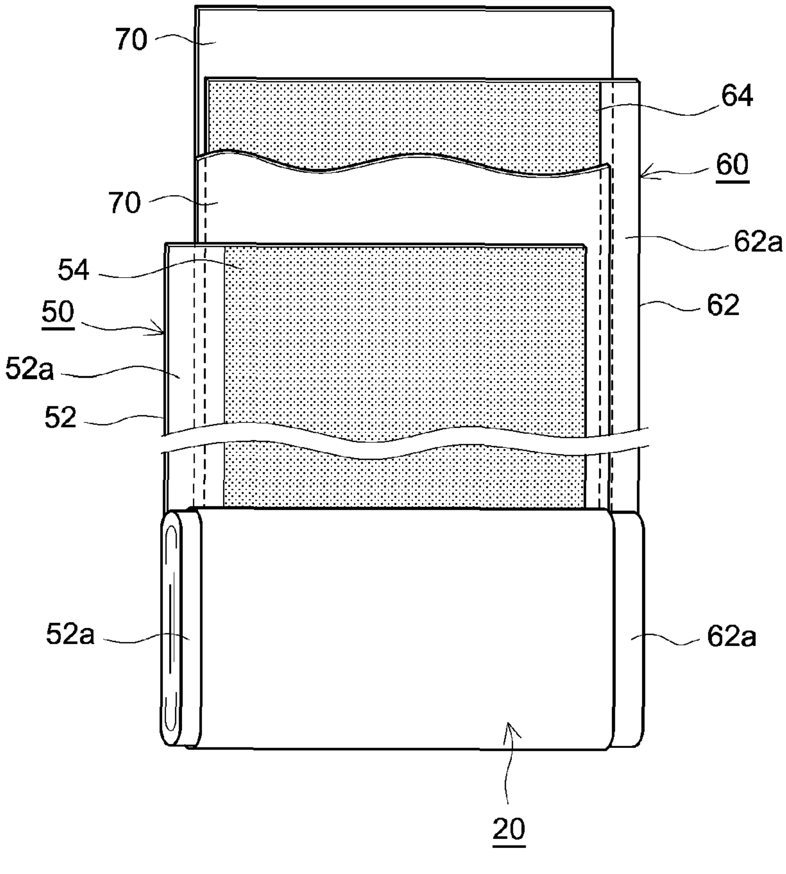


FIG.2

Europäisches Patentamt
European Patent Office
Office européen des brevets

# EUROPEAN SEARCH REPORT

Application Number
EP 23 20 1599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/239807 A1 (NIPPON CATALYTIC CHEM IND [JP]) 17 November 2022 (2022-11-17) * comparative example 9; paragraph [0274]; table 8 * | 1,2,4,6 | INV. H01M10/0525 H01M10/0567 H01M10/0569 H01M10/42 ADD. H01G11/62 H01G11/64 H01M10/30 H01M10/34 |
| X | WO 2020/151658 A1 (NINGDE AMPEREX TECHNOLOGY LTD [CN]) 30 July 2020 (2020-07-30) * claims 5-6; table 1; compounds II-5, II-7, II-8 * | 1,3-6 | |
| X | JP 2011 077029 A (ADEKA CORP; DENSO CORP) 14 April 2011 (2011-04-14) * claim 3; tables 1,2; compound D1 * | 1,6 | |
| A | US 2017/110758 A1 (KANAZAWA YOSHINORI [JP]) 20 April 2017 (2017-04-20) * claim 9; example 9; table 1; compounds II-1g * | 1-6 | |
| | | | TECHNICAL FIELDS SEARCHED (IPC) |
| | | | H01M H01G |

The present search report has been drawn up for all claims

2

| Place of search | Date of completion of the search | Examiner |
|---|---|---|
| Munich | 11 March 2024 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 20 1599

This annex lists the patent family members relating to the patent documents cited in the above-mentioned European search report. The members are as contained in the European Patent Office EDP file on
The European Patent Office is in no way liable for these particulars which are merely given for the purpose of information.

11-03-2024

| Patent document cited in search report | Publication date | Patent family member(s) | Publication date |
|---|---|---|---|
| WO 2022239807 A1 | 17-11-2022 | CN 117321824 A | 29-12-2023 |
| | | EP 4329036 A1 | 28-02-2024 |
| | | JP WO2022239807 A1 | 17-11-2022 |
| | | KR 20240008897 A | 19-01-2024 |
| | | WO 2022239807 A1 | 17-11-2022 |
| WO 2020151658 A1 | 30-07-2020 | CN 109786835 A | 21-05-2019 |
| | | US 2022123363 A1 | 21-04-2022 |
| | | WO 2020151658 A1 | 30-07-2020 |
| JP 2011077029 A | 14-04-2011 | JP 5631111 B2 | 26-11-2014 |
| | | JP 2011077029 A | 14-04-2011 |
| US 2017110758 A1 | 20-04-2017 | CN 106661066 A | 10-05-2017 |
| | | JP 6292727 B2 | 14-03-2018 |
| | | JP WO2016002828 A1 | 08-06-2017 |
| | | KR 20170021289 A | 27-02-2017 |
| | | US 2017110758 A1 | 20-04-2017 |
| | | WO 2016002828 A1 | 07-01-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015159120 A


### Non-patent literature cited in the description


- **FREIBERG et al.** *Electrochimica. Acta,* 2020, vol. 346, 136271
- **YU et al.** *Electrochem. Commun.,* 2022, vol. 138, 107286